Europäisches Patentamt

European Patent Office

Office européen des brevets

(19)

(11) **EP 1 419 365 B1**

(12) **EUROPÄISCHE PATENTSCHRIFT**

(45) Veröffentlichungstag und Bekanntmachung des Hinweises auf die Patenterteilung:
**12.01.2005 Patentblatt 2005/02**

(51) Int Cl.⁷: **G01D 5/241**

(21) Anmeldenummer: 02706746.1

(22) Anmeldetag: **21.02.2002**

(86) Internationale Anmeldenummer:
**PCT/EP2002/001857**

(87) Internationale Veröffentlichungsnummer:
**WO 2003/071233 (28.08.2003 Gazette 2003/35)**

(54) **VORRICHTUNG UND VERFAHREN ZUM AUSLESEN EINER DIFFERENTIALKAPAZITÄT MIT EINER ERSTEN UND ZWEITEN TEILKAPAZITÄT**

DEVICE AND METHOD FOR READING OUT A DIFFERENTIAL CAPACITOR COMPRISING A FIRST AND SECOND PARTIAL CAPACITOR

DISPOSITIF ET PROCEDE DE LECTURE D'UN CONDENSATEUR DIFFERENTIEL COMPORTANT UN PREMIER ET UN DEUXIEME CONDENSATEUR PARTIEL

(84) Benannte Vertragsstaaten:
**CH DE FR GB LI**

(43) Veröffentlichungstag der Anmeldung:
**19.05.2004 Patentblatt 2004/21**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder: **NEHRIG, Oliver**
**47441 Moers (DE)**

(74) Vertreter: **Zinkler, Franz, Dipl.-Ing. et al**
**Patentanwälte Schoppe, Zimmermann, Stöckeler & Zinkler,**
**Postfach 246**
**82043 Pullach bei München (DE)**

(56) Entgegenhaltungen:
• **GEVATTER H-J ET AL: "AUSLESEVERFAHREN FUER DIFFERENTIAL-KONDENSATOREN. SELECTION PROCESS FOR DIFFERENTIAL CAPACITORS" F & M. FEINWERKTECHNIK MIKROTECHNIK MESSTECHNIK, CARL HANSER GMBH, MUNCHEN, DE, Bd. 103, Nr. 3/4, 1. April 1995 (1995-04-01), Seiten 158-160,163-164, XP000516412 MÜNCHEN,DE ISSN: 0944-1018**

**Beschreibung**

Die vorliegende Erfindung bezieht sich auf das Auslesen von Kapazitäten und insbesondere auf das Auslesen von Differentialkapazitäten.

In vielen Vorrichtungen werden heutzutage Differentialkapazitäten als sensitive Elemente eingesetzt. Beispielsweise werden Differentialkapazitäten als elektrische Elemente an diversen Sensoren verwendet. Solche Sensoren umfassen beispielsweise Beschleunigungssensoren, Drucksensoren oder Wegsensoren. Für die Auslese von Differentialkapazitäten sind heutzutage viele Schaltungsvarianten bekannt, die jedoch für spezielle Problemstellungen nicht oder nur bedingt einsetzbar sind.

Beispielsweise ist es bei bestimmten Anwendungen erforderlich, eine relativ langsame Kapazitätsänderungen mit einer hohen Auflösung zu erfassen. Gleichzeitig müssen jedoch während eines Auslesens kurzzeitig auftretende Kapazitätsänderungen in sehr kurzer Zeit erkannt werden. Derartige Anforderungen treten beispielsweise auf, wenn ein einzelner Sensor mit einer beschleunigungsabhängigen Differentialkapazität für eine Traktionskontrolle eines Kraftfahrzeuges eingesetzt wird und dabei gleichzeitig als ein Airbagsensor fungieren soll. Ein derartiger Sensor sollte in der Lage sein, einerseits einen Crash innerhalb einer Zeitspanne zu erkennen, die ermöglicht, daß ein Airbag ausgelöst wird, bevor es zu einem Schaden der Personen des Kraftfahrzeuges kommt. Gleichzeitig sollte ein solcher Sensor in der Lage sein, die im Vergleich zu den bei einem Crash auftretenden Verzögerungen wesentlich langsameren Beschleunigungsdaten mit hoher Genauigkeit zu erfassen, um eine sichere Traktionskontrolle zu ermöglichen.

Ein weiteres Beispiel, bei dem ein Sensor die Anforderungen sowohl einer Erfassung von langsamen Kapazitätsänderungen mit einer hohen Genauigkeit als auch eines Erkennens sehr schneller Änderungen erfüllen soll, umfaßt die Manipulation schwerer Lasten. Oftmals wird bei bestimmten Anwendungen, wie beispielsweise bei einem Abbruch von Häusern, bei dem ein Kran eine Bewegung einer Eisenkugel steuert, eine Steuerung von Gewichten in Abhängigkeit von Beschleunigungssignalen durchgeführt, die von einem Sensor, der an dem schweren Gewicht befestigt ist, geliefert werden. Für eine solche Anwendung sollte einerseits die sehr langsame Bewegung der großen Masse durch den Sensor hochaufgelöst erfaßt werden, um ein genaues Manövrieren in eine bestimmte Position durchzuführen. Andererseits sollten Beschleunigungsänderungen durch Stöße, die bei einem Auftreffen der großen Masse beispielsweise auf einer Hauswand auftreten und mehrere 100.000 g umfassen können, erkannt werden, wobei die Anforderungen an einen solchen Sensor aufgrund der hohen Beschleunigungsänderung in einer sehr kurzen Zeitintervall wesentlich höher ist als für den oben beschriebenen Fall eines Sensors, der als Traktionskontrolle und gleichzeitig als Airbagsensor fungieren soll.

Für die oben beschriebenen Anforderungen einer Erfassung einer langsamen Kapazitätsänderung der Differentialkapazität mit einer hohen Auflösung und dem gleichzeitigen Erkennen von sehr schnellen Kapazitätsänderung werden bekannterweise zwei oder mehrere Sensoren verwendet, wobei ein erster bekannter Sensor verwendet wird, um die langsame Kapazitätsänderung mit hoher Genauigkeit durchzuführen und ein zweiter Sensor verwendet wird, um die schnelle Kapazitätsänderung zu erkennen. Zum Auslesen wird für jeden Sensor jeweils eine Ausleseschaltung verwendet, die ferner speziell an die Erfordernisse des Sensors angepaßt sein kann.

Eine bekannte Auslese-Schaltung ist beispielsweise in der DE 19645028 A1 beschrieben, bei der ein LC-Oszillator verwendet wird, um eine Auslenkung einer Mittelplatte eines Differentialkondensators zu erfassen. Mittels einer Umschalteinrichtung werden abwechselnd die Teilkapazitäten der Differentialkapazität als frequenzbestimmende Kapazitäten in einen LC-Schwingkreis geschaltet. Der LC-Schwingkreis weist einen Oszillatortransistor auf, der in einer Source-Schaltung betrieben wird. Die Umschalteinrichtung umfaßt Schaltdioden, wobei eine Frequenzmessung durch ein geeignet gewähltes Zeitfenster so verschoben wird, daß eine Frequenzmessung während eines Einschwingzustandes des Oszillators ausgeschlossen wird. Daraufhin werden die Frequenzen der beiden Schaltkreise bestimmt und einer weiteren Auswertung zur Erlangung einer Auslenkung der Mittelplatte zugeführt. Die Frequenzmessung kann beispielsweise durch ein Messen von Impulsen, die in ein vorbestimmtes Zeitfenster fallen, bestimmt werden, wobei über eine Vielzahl von Schwingungsperioden gemittelt wird. Der oben beschriebene Schaltungsaufbau weist jedoch den Nachteil auf, daß ein kontinuierliches Auslesen mit großer Genauigkeit nicht möglich ist, da während eines Einschwingzustandes des Oszillators ein Auslesen nicht möglich ist. Dadurch ist ferner ein sicheres Auslesen von kurzzeitig auftretenden schnellen Kapazitätsänderungen, die während der Einschwingzustände auftreten, nicht möglich.

Die US 4,860,232 offenbart eine Schaltung zum Messen von Kapazitäten, wobei eine Referenz-Kapazität und eine Sensor-Kapazität mit einer Spannungs-Vergleichs-Einrichtung verbunden sind, der eine Eingangsspannung mit einer Referenzspannung vergleicht. Eine Rückkopplungsschleife wird verwendet, um eine Versatz-Spannung zu erzeugen, die proportional zu der Differenz der Referenz-Kapazität und der Sensor-Kapazität ist. Die Verwendung der Spannungs-Vergleichs-Einrichtung weist jedoch den Nachteil auf, daß aufwendige Kalibrierungen notwendig sind, um Ladungsinjektionen, die durch ein Umschalten hervorgerufen werden, auszugleichen.

Die US 5,973,538 beschreibt eine Sensorschaltung, bei der eine erste Anordnung von hintereinander geschalteten CMOS-Invertern, die mit einem ersten Kondensator verbunden ist, und eine zweite Anordnung von hintereinander geschalteten CMOS-Invertern, die mit einem zweiten Kondensator verbunden ist, verwendet werden, um jeweils Ausgangsspannungen zu erzeugen, die auf den Kapazitätswert des ersten und zweiten Kondensators hinweisen.

F&M Feinwerktechnik & Messtechnik 103(1995) April, Nos 3/4, Münch en, DE, Seiten 158-160,163,164 offenbart weiter eine Auslesevorric htung und Ausleseverfahren für Differenzial Kondensatoren mit einem ersten und zweiten Oszillator, wobei die Differentialka pazität mit beiden Oszillatoren verbunden ist.

Die Aufgabe der vorliegenden Erfindung besteht darin, ein Konzept zu schaffen, das ein verbessertes Auslesen einer Differentialkapazität ermöglicht.

Diese Aufgabe wird durch eine Vorrichtung nach Anspruch 1 und ein Verfahren nach Anspruch 17 gelöst.

Gemäß der vorliegenden Erfindung wird für eine erste der beiden Teilkapazitäten ein erster Oszillator und für eine zweite Teilkapazität ein zweiter Oszillator bereitgestellt, wobei die Oszillatoren im Betrieb mit den zugeordneten Teilkapazitäten verschaltet sind. Jeder der Oszillatoren ist durch ein Umschalten von frequenzbestimmenden Elementen in zwei Zuständen betreibbar. Entsprechend zu dem Zustand, in dem sich das frequenzbestimmende Element des Oszillators befindet, erzeugt der erste Oszillator eine erste oder zweite Schwingung und der zweite Oszillator eine dritte oder vierte Schwingung. Bei einer nachfolgenden Auswertung in einer Auswerteschaltung wird unter Verwendung der erfaßten Periodendauern ein Ausgangssignal gebildet, das auf einen Quotienten der ersten und der zweiten Teilkapazität hinweist.

Die vorliegenden Erfindung basiert auf der Erkenntnis, daß das Erfassen der Periodendauern für jeden der zwei Schwingungszustände jedes Oszillators, der mit einer Teilkapazität verschaltet ist und die Quotientenbildung unter Verwendung der Periodendauern ermöglicht, daß unbekannte störende Einflüsse, die ansonsten ein genaues Auslesen der Teilkapazitäten verhindern, eliminiert werden können, so daß das Ausgangssignal, das auf einen Quotienten der Teilkapazitäten hinweist, mit einer hohen Genauigkeit gebildet werden kann.

Das Bilden des Quotienten unter Verwendung der erfaßten Periodendauern erfolgt bei einem bevorzugten Ausführungsbeispiel derart, daß der Zähler des Quotienten einen Wert aufweist, der auf eine Differenz einer ersten Periodendauer der ersten Schwingung des ersten Oszillators und einer zweiten Periodendauer der zweiten Schwingung des ersten Oszillators hinweist, während der Nenner einen Wert umfaßt, der auf eine Differenz einer dritten Periodendauer der dritten Schwingung des zweiten Oszillators und einer vierten Periodendauer der vierten Schwingung des zweiten Oszillators hinweist.

Ein Vorteil der vorliegenden Erfindung besteht darin, daß bei einer geeigneten Wahl der frequenzbestimmenden Elemente, so daß die Werte derselben in der gleichen Größenordnung liegen, eine kontinuierliche Erfassung durchführbar ist, da für jeden Oszillator das Umschalten der Zustände der frequenzbestimmenden Elemente zeitgleich mit dem Beginn einer Erfassung der Schwingung, d.h. ohne ein Abwarten eines Einschwingvorgangs, durchführbar ist.

Bei einem bevorzugten Ausführungsbeispiel erfolgt das Umschalten der Zustände für den ersten Oszillator zeitgleich mit dem Umschalten für den zweiten Oszillator und in konstanten Zeitintervallen, wodurch eine Vereinfachung einer nachfolgenden Auswertung erreicht wird.

Bei einem bevorzugten Ausführungsbeispiel werden die Periodendauern der Schwingungen durch ein Erfassen einer Anzahl von Taktperioden in einer ersten Erfassungseinrichtung, die mit dem ersten Oszillator verbunden ist, und in einer zweiten Erfassungseinrichtung, die mit dem zweiten Oszillator verbunden ist, bestimmt. Bei diesem Ausführungsbeispiel können durch die Ausleseeinrichtung sowohl langsame Kapazitätsänderungen mit hoher Genauigkeit erfaßt werden und gleichzeitig kurzzeitige hohe Kapazitätsänderungen erkannt werden. Dazu wird innerhalb eines Erfassungszeitintervalls, innerhalb dessen der erste und zweite Oszillator jeweils einen Schwingungszustand aufweist, zu vorbestimmten Zeitpunkten eine zu den jeweiligen vorbestimmten Zeitpunkten erfaßte erste Anzahl von Taktperioden der ersten Erfassungseinrichtung mit einer zu diesem Zeitpunkt erfaßten zweiten Anzahl von Taktperioden der zweiten Erfassungseinrichtung verglichen, wobei das Ergebnis des Vergleichs mit einem Grenzwert verglichen wird. Das Vergleichen der Anzahl von Taktperioden in kürzeren Zeitabständen, die beliebig gewählt werden können, ermöglicht, daß kurzzeitige starke Änderungen der ersten und zweiten Teilkapazität erkannt werden können, während gleichzeitig eine langsame Änderung der Teilkapazitäten mit einer hohen Genauigkeit durch das Bestimmen der Anzahl von Taktperioden über das längerzeitliche Erfassungszeitintervall durchgeführt werden kann.

Bevorzugte Ausführungsbeispiele der vorliegenden Erfindung werden nachfolgend Bezug nehmend auf die beiliegenden Zeichnungen näher erläutert. Es zeigen:

Fig. 1    ein Blockschaltbild eines Ausführungsbeispiels der vorliegenden Erfindung; und

Fig. 2    ein Blockschaltbild eines weiteren Ausführungsbeispiels der vorliegenden Erfindung.

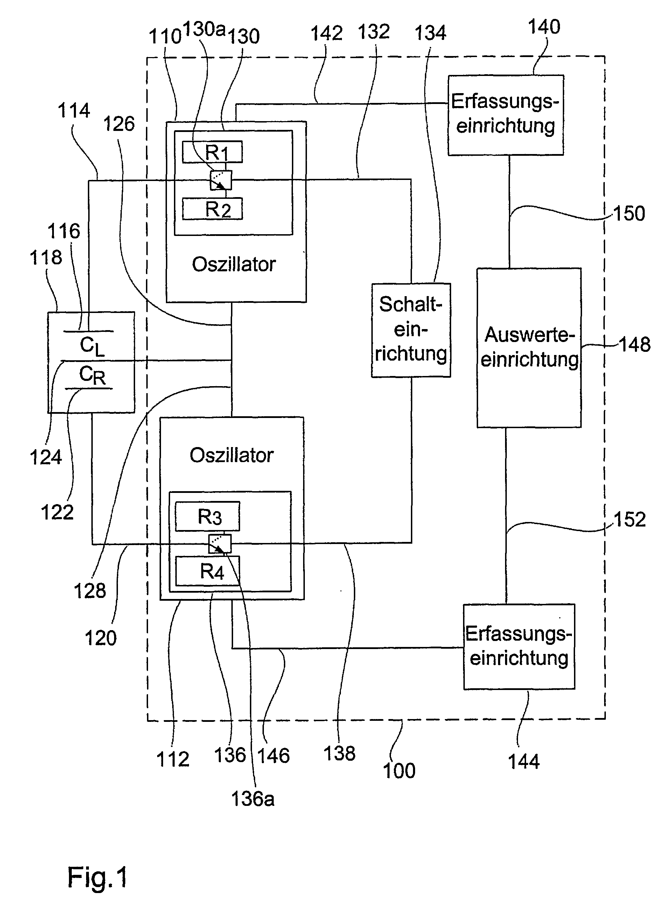

Unter Bezugnahme auf Fig. 1 ist eine Auslesevorrichtung 100 als ein erstes Ausführungsbeispiel der vorliegenden Erfindung gezeigt. Die Auslesevorrichtung 100 weist einen ersten Oszillator 110 und einen zweiten Oszillator 112 auf, wobei der erste Oszillator 110 über eine Leitung 114 mit einer ersten festen Elektrode 116 einer Differentialkapazität 118 verbindbar ist, während der zweite Oszillator 112 über eine Leitung 120 mit einer zweiten festen Elektrode 122 verbindbar ist. Bei einem Ausführungsbeispiel umfassen der erste Oszillator 110 und der zweite Oszillator 112 jeweils einen Rechteckoszillator, der durch eine CMOS-Schaltung gebildet ist.

Die Differentialkapazität 118 weist eine bewegliche Elektrode 124 auf, die über eine Leitung 126 mit dem ersten Oszillator 110 und über eine Leitung 128 mit dem zweiten Oszillator 112 verbindbar ist. Die Differentialkapazität 118 umfaßt jeden bekannten Typ, beispielsweise einen Halbleiter-Differentialkondensator, der mittels bekannter Ätz- und Maskierungsschritte in einem Halbleitersubstrat gebildet wird. Die Differentialkapazität 118 umfaßt beispielsweise ein sensitives Element eines kapazitiven Sensors, der beispielsweise ein Beschleunigungssensor, ein Drucksensor oder ein Wegsensor sein kann.

Der erste Oszillator 110 weist ein erstes frequenzbestimmendes Element 130 auf, das über die Leitung 114 mit der Elektrode 116 verbindbar ist. Der erste Oszillator 110 ist ferner über eine Leitung 132 mit einer Schalteinrichtung 134 verbunden, um das frequenzbestimmende Element 130 in einen ersten Zustand oder in einen zweiten Zustand zu schalten. Bei dem beschriebenen Ausführungsbeispiel weist das erste frequenzbestimmende Element 130 einen ersten Widerstand R1 und einen zweiten Widerstand R2 auf, die über einen Schalter 130a jeweils mit der Leitung 114 verbindbar sind. Dabei ist in dem ersten Zustand des frequenzbestimmenden Elements 130 der erste Widerstand R1 mit der Leitung 114 verbunden, während in einem zweiten Zustand der zweite Widerstand R2 mit der Leitung 114 verbunden ist.

Der zweite Oszillator 112 weist ein zweites frequenzbestimmendes Element 136 auf, wobei das zweite frequenzbestimmende Element über die Leitung 120 mit der festen Elektrode 122 der Differentialkapazität 118 verbindbar ist. Der zweite Oszillator 112 ist ferner über eine Leitung 138 mit der Schalteinrichtung 134 verbunden, um von der Schalteinrichtung 134 ein Schaltsignal zum Schalten des zweiten frequenzbestimmenden Elements 136 in einen dritten Zustand oder einen vierten Zustand durchzuführen. Bei dem beschriebenen Ausführungsbeispiel umfaßt das zweite frequenzbestimmende Element 136 einen dritten Widerstand R3, der in dem dritten Zustand mit der Leitung 120 verbunden ist, und einen vierten Widerstand R4, der in dem vierten Zustand mit der Leitung 120 verbunden ist, wobei das Verbinden der Widerstände R3 und R4 ansprechend auf ein Signal der Schalteinrichtung 134 mittels eines Schalters 136a erfolgt.

Die Ausleseeinrichtung 100 umfaßt ferner eine erste Erfassungseinrichtung 140, die über eine Leitung 142 mit dem ersten Oszillator 110 verbunden ist. Die erste Erfassungseinrichtung 140 ist ausgebildet, um eine Periodendauer einer durch den ersten Oszillator erzeugten Schwingung zu erfassen. Die Ausleseeinrichtung 100 umfaßt ferner eine zweite Erfassungseinrichtung 144 zum Erfassen einer Periodendauer einer durch den zweiten Oszillator 112 erzeugten Schwingung, wobei die zweite Erfassungseinrichtung 144 über eine Leitung 146 mit dem zweiten Oszillator 112 verbunden ist. Die Erfassungseinrichtungen 140 und 144 können jeden bekannte Einrichtung zum Erfassen von Periodendauern umfassen. Bei einem Ausführungsbeispiel, das weiter unten genauer erklärt wird, weisen die Erfassungseinrichtung 140 und 144 Zähler auf, die eine Anzahl von Taktperioden der Schwingungen innerhalb eines bestimmten Zeitintervalls erfassen.

Eine Auswerteeinrichtung 148 ist ferner über eine Leitung 150 mit der ersten Erfassungseinrichtung 140 verbunden, während dieselbe über eine Leitung 152 mit der zweiten Erfassungseinrichtung 144 verbunden ist.

Zur Durchführung eines Auslesevorgangs legt die Schalteinrichtung 134 über die Leitung 132 ein Schaltsignal an den ersten Oszillator 110 an, so daß der erste R1 oder zweite R2 Widerstand mit der Elektrode 116 verbunden wird. Ferner legt die Schalteinrichtung 134 über die Leitung 138 Schaltsignale an den zweiten Oszillator 112 an, die ein Verbinden des dritten R3 oder vierten R4 Widerstands mit der Elektrode 122 bewirken.

Der erste Oszillator 110 und der zweite Oszillator 112 erzeugen während eines Betriebs der Ausleseeinrichtung in der Oszillatorschaltung, die durch den Oszillator zusammen mit dem frequenzbestimmenden Element und der Teilkapazität gebildet ist, je nach geschalteten Zustand der frequenzbestimmenden Elemente eine erste oder zweite bzw. eine dritte oder vierte Schwingung, wobei eine Taktperiode der Schwingungen von einer Aufladezeit $\tau$ der Teilkapazität C abhängt, mit der der Oszillator jeweils verschaltet ist. Die Aufladezeit $\tau$ hängt dabei gemäß der bekannten Formel $\tau = R \cdot C$ sowohl von dem Widerstandswert R des Widerstands, der mit der Teilkapazität C verschaltet ist, als auch von der Teilkapazität C selbst ab.

Zusätzlich zu der Abhängigkeit von der Aufladezeit einer jeweiligen Teilkapazität wird eine Periodendauer der Oszillatoren 110 und 112 durch eine Aufladezeit $\tau_{OSC}$ beeinflußt, die nicht von der Teilkapazität C und den frequenzbestimmenden Elementen abhängt sondern von weiteren Bauelementen der Oszillatoren 110 bzw. 112 abhängt. Dadurch ergibt sich für eine Periodendauer T eines jeweiligen Oszillators: $T = R \cdot C + \tau_{OSC}$. Die Aufladezeit $\tau_{OSC}$ ist typischerweise unbekannt und aufgrund diverser Rauscheinflüsse auf die Oszillatoren 110 und 112 zeitlich nicht konstant. Dies verhindert, daß durch ein einfaches Erfassen einer Periodendauer einer einzigen Schwingung eines Oszillators, wie es im Stand der Technik durchgeführt wird, Teilkapazitäten mit hoher Genauigkeit ausgelesen werden können.

Im folgenden wird nun anhand eines Betriebs der Ausleseeinrichtung 100 erklärt, wie durch die erfindungsgemäße Verwendung von zwei Oszillatoren 110 und 112 ein gegenüber dem Stand der Technik verbessertes Auslesen erreicht wird.

Ein Anlegen eines ersten Schaltsignals an den ersten Oszillator 110 bewirkt, daß das erste frequenzbestimmende Element in den ersten Zustand geschaltet wird, d.h. der erste Widerstand R1 wird ansprechend auf das erste Schaltsignal mit der Leitung 114 verbunden. In entsprechender Weise wird das zweite frequenzbestimmende Element 136 des zweiten Oszillators 112 durch ein Schaltsignal der Schalteinrichtung 134, die über die Leitung 138 übertragen werden, in den dritten Zustand geschaltet, d.h. der dritte Widerstand R3 wird mittels des Schalters 136a mit der Teilkapazität $C_R$, die durch die Elektroden 124 und 122 bestimmt ist, verbunden. Vorzugsweise erfolgt das Umschalten des Schwingungszustands des ersten 110 und zweiten 112 Oszillators durch das Schalten der jeweiligen frequenzbestimmenden Elemente gleichzeitig, um zu erreichen, daß die Periodendauern des ersten Oszillators 110 und die Periodendauern des zweiten Oszillators 112 über den gleichen Zeitraum erfaßbar sind. Das gleichzeitige Erfassen gewährleistet bei einer nachfolgenden Quotientenbildung ein genaues Ergebnis wie es weiter unten genauer erklärt wird.

Nach dem gleichzeitigen Umschalten des ersten Oszillators 110 in den ersten Zustand und des zweiten Oszillators 112 in den dritten Zustand zu einem ersten Umschaltzeitpunkt erzeugt der erste Oszillator 110 die erste Schwingung mit einer Taktperiode $T_{L1}$ und der zweite Oszillator 112 die dritte Schwingung mit der Taktperiode $T_{R1}$. Gemäß dem obigen gilt für die Taktperiode $T_{L1}$: $T_{L1} = R_{L1}C_L + \tau_{OSC,L1}$. In der Gleichung sind $R_{L1}$ der Widerstandswert des Widerstands R1 und $\tau_{OSC,L1}$ der Zusatzterm, der die Aufladezeiten durch die weiteren Bauelemente des ersten Oszillators beschreibt. Ferner sind Entsprechend gilt für die Taktperiode $T_{R1}$ der dritten Schwingung des zweiten Oszillators: $T_{R1} = R_{R2}C_R + \tau_{OSC,R1}$. Hier sind $R_{R2}$ der Widerstandswert des Widerstands R3 und $\tau_{OSC,R1}$ der Zusatzterm, der die Aufladezeiten durch die weiteren Bauelemente des zweiten Oszillators in dem dritten Zustand beschreibt.

Die Oszillatoren 110 und 112 erzeugen die erste bzw. dritte Schwingung kontinuierlich im Verlauf eines ersten Erfassungszeitintervalls, das eine vorbestimmte Länge aufweist, wobei der Anfangszeitpunkt des ersten Erfassungszeitintervalls dem ersten Umschaltzeitpunkt entspricht und der Endzeitpunkt des ersten Erfassungszeitintervalls einem zweiten Umschaltzeitpunkt entspricht, zu dem das erste frequenzbestimmende Element 130 des ersten Oszillators in den zweiten Zustand geschaltet und das zweite frequenzbestimmende Element 136 des zweiten Oszillators 112 in den vierten Zustand geschaltet wird. Während sich das erste frequenzbestimmende Element in dem ersten Zustand befindet erfaßt die erste Erfassungseinrichtung 140 die Periodendauer der durch den ersten Oszillator 110 erzeugten Schwingung und liefert ein erstes Signal, das auf eine Periodendauer der ersten Schwingung hinweist, zu der Auswerteeinrichtung 148. Entsprechend erfaßt die zweite Erfassungseinrichtung 144, während das zweite frequenzbestimmende Element 136 in den dritten Zustand geschaltet ist, die Periodendauer der durch den zweiten Oszillator 112 erzeugten dritten Schwingung und liefert ein drittes Signal, das auf eine Periodendauer der dritten Schwingung hinweist, zu der Auswerteeinrichtung 148.

Am Ende des ersten Erfassungszeitintervalls, d.h. zu dem zweiten Umschaltzeitpunkt wird das erste frequenzbestimmende Element 130 des ersten Oszillators in den zweiten Zustand geschaltet und das zweite frequenzbestimmende Element 136 des zweiten Oszillators 112 in den vierten Zustand geschaltet, so daß die Oszillatoren 110 und 112 nach dem Umschalten die zweite bzw. vierte Schwingung erzeugen. Für eine Periodendauer $T_{L2}$ der zweiten Schwingung ergibt sich $T_{L2} = R_{L2}C_L + \tau_{OSC,L2}$. $\tau_{OSC,L2}$, wobei $\tau_{OSC,L2}$ die Aufladezeiten durch die weiteren Bauelemente des ersten Oszillators beschreibt, wenn sich das erste frequenzbestimmende Element 130 in dem zweiten Zustand befindet, und $R_{L2}$ der Widerstandswert des zweiten Widerstands R2 ist. Entsprechend gilt für eine Taktperiode $T_{R2}$ der vierten Schwingung des zweiten Oszillators $T_{R2} = R_{R2}C_R + \tau_{OSC,R2}$. $\tau_{OSC,R2}$ gibt hier die Aufladezeiten durch die weiteren Bauelemente des zweiten Oszillators an, wenn sich das zweite frequenzbestimmende Element 136 in dem vierten Zustand befindet. Ferner entspricht $R_{R2}$ dem Widerstandswert des Widerstands R4.

Die Oszillatoren 110 und 112 erzeugen die zweite bzw. vierte Schwingung kontinuierlich im Verlauf des zweiten Erfassungszeitintervalls, das vorzugsweise die gleiche Länge wie das erste Erfassungszeitintervalls aufweist, um eine nachfolgende Auswertung zu erleichtern. Das zweite Erfassungszeitintervall weist somit einen Anfangszeitpunkt auf, der dem zweiten Umschaltzeitpunkt entspricht, und ferner einen Endzeitpunkt auf, der einem dritten Umschaltzeitpunkt entspricht, zu dem das erste frequenzbestimmende Element 130 des ersten Oszillators von dem zweiten Zustand wieder in den ersten Zustand geschaltet wird und das zweite frequenzbestimmende Element 136 des zweiten Oszillators 112 von dem vierten Zustand wieder in den dritten Zustand geschaltet wird. Während sich das erste frequenzbestimmende Element 130 innerhalb des zweiten Zeiterfassungsintervalls in dem zweiten Zustand befindet, erfaßt die erste Erfassungseinrichtung 140 die Periodendauer der durch den ersten Oszillator 110 erzeugten Schwingung und liefert ein zweites Signal, das auf eine Periodendauer der zweiten Schwingung hinweist, zu der Auswerteeinrichtung 148. Entsprechend erfaßt die zweite Erfassungseinrichtung 144, während das zweite frequenzbestimmende Element 136 in den vierten Zustand geschaltet ist, die Periodendauer der durch den zweiten Oszillator 112 erzeugten vierten Schwingung und liefert ein Signal, das auf eine Periodendauer der vierten Schwingung hinweist, zu der Auswerteeinrichtung 148.

Folglich werden pro Oszillator zwei Schwingungen, die jeweils unterschiedliche Periodendauern aufweisen, erzeugt und ferner durch die Erfassungseinrichtungen 140 und 144 vier Signale, die jeweils auf eine der Periodendauern der Schwingungen hinweisen, zu der Auswerteeinrichtung geliefert.

Bei einem Ausführungsbeispiel umfaßt die erste Erfassungseinrichtung 140 und die zweite Erfassungseinrichtung 144 jeweils eine Zähleinrichtung, die die Anzahl von Taktperioden der erzeugten Schwingungen, die in dem ersten bzw. zweiten Erfassungszeitintervall auftreten, erfassen. Nachfolgend wird unter Bezugnahme auf die Erfassung einer Anzahl von Taktperioden eine Auswertung zur Erzeugung eines Ausgangssignals, das auf einen Quotienten der Teilkapazitäten hinweist, erklärt.

Durch das Erfassen während des ersten bzw. zweiten Erfassungszeitintervalls wird bei diesem Ausführungsbeispiel eine zeitliche Mittelung der Periodendauern der Taktperioden, die während des Erfassungszeitfensters auftreten, durchgeführt. Wie es nachfolgend noch genauer erklärt wird, ist es für ein Auslesen mit hoher Genauigkeit erforderlich, die zeitliche Länge der Erfassungszeitintervalle und die Größenordnung der Taktfrequenz der Oszillatoren, die durch die Teilkapazitäten und die frequenzbestimmenden Elemente bestimmt wird, geeignet zu wählen, um statistische Rauschanteile über den Zeitraum herauszumitteln.

Die erste Erfassungseinrichtung 140 und die zweite Erfassungseinrichtung 144 erfassen an jedem Oszillator die Anzahl der Takte N während der ersten und zweiten Erfassungszeitintervalle, die vorzugsweise jeweils eine gleiche vorbestimmte Zeitlänge $T_S$ aufweisen. Die Anzahl von Takten N stellt einen Meßwert dar, der umgekehrt proportional zu der Periodendauer der Schwingung ist. Wie oben beschrieben ist, werden jeweils am Anfang eines Erfassungszeitintervalls die frequenzbestimmenden Elemente 130 und 136 geschaltet. Die erste Erfassungseinrichtung 140 gibt jeweils ein erstes und zweites Erfassungssignal aus. Das erste Erfassungssignal weist auf eine erste Anzahl $N_{L1}$ von innerhalb des ersten Erfassungszeitintervalls auftretenden Taktperioden des ersten Oszillators 110 in dem ersten Zustand hin. Ferner weist das zweite Erfassungssignal auf eine zweite Anzahl $N_{L2}$ von innerhalb des zweiten Erfassungszeitintervall auftretenden Taktperioden des ersten Oszillators in dem zweiten Zustand hin, wobei das erste und zweite Erfassungszeitintervall jeweils die Zeitdauer $T_S$ umfassen. Unter Berücksichtigung der Abhängigkeit der Periodendauer T gemäß $T = RC + \tau_{osc}$ ergibt sich für die Anzahl $N_{L1}$ bzw. $N_{L2}$:

$$N_{L1} = \frac{T_S}{R_{L1} \cdot C_L + \tau_{osc,L1}} \qquad N_{L2} = \frac{T_S}{R_{L2} \cdot C_L + \tau_{osc,L2}}$$

Entsprechend gibt die zweite Erfassungseinrichtung 144 ein drittes Erfassungssignal aus, das auf eine dritte Anzahl $N_{R1}$ von Takten des zweiten Oszillators in dem dritten Zustand des frequenzbestimmenden Elements hinweist, während ein viertes Ausgangssignal der zweiten Erfassungseinrichtung 144 auf eine vierte Anzahl $N_{R4}$ von Takten während des Zeitintervalls hinweist, innerhalb dem das zweite frequenzbestimmende Element in den vierten Zustand geschaltet ist. Die Anzahl $N_{R1}$ bzw. $N_{R2}$ ergeben sich gemäß den folgenden Formeln:

$$N_{R1} = \frac{T_S}{R_{R1} \cdot C_R + \tau_{osc,R1}} \qquad N_{R2} = \frac{T_S}{R_{R2} \cdot C_R + \tau_{oscR2}}.$$

Die ersten bis vierten Erfassungssignale werden über die Leitungen 150 bzw. 152 in die Auswerteeinrichtung 148 eingegeben. Vorzugsweise sind die erste Erfassungseinrichtung 140 und die zweite Erfassungseinrichtung 144 so ausgebildet, daß die Ausgangssignale als Datenworte in die Auswerteeinrichtung 148 eingegeben werden. Die Auswerteeinrichtung 148 führt daraufhin einen Berechnungsvorgang durch, bei dem ein Quotient gebildet wird, wobei der Zähler von den Taktanzahlen $N_{L1}$ und $N_{L2}$ des ersten Oszillators abhängt, während der Nenner des Quotienten von den Taktanzahlen $N_{R1}$ und $N_{R2}$ des zweiten Oszillators abhängt. Bei dem beschriebenen Ausführungsbeispiel wird der Quotient gemäß der folgenden Formel berechnet:

$$\frac{\dfrac{1}{N_{L1}} - \dfrac{1}{N_{L2}}}{\dfrac{1}{N_{R1}} - \dfrac{1}{N_{R2}}} = \frac{\dfrac{R_{L1} \cdot C_L + \tau_{osc,L1}}{T_S} - \dfrac{R_{L2} \cdot C_L + \tau_{osc,L2}}{T_S}}{\dfrac{R_{R1} \cdot C_R + \tau_{osc,R1}}{T_S} - \dfrac{R_{R2} \cdot C_R + \tau_{osc,R2}}{T_S}} = \frac{(R_{L1} - R_{L2}) \cdot C_L + (\tau_{osc,L1} - \tau_{osc,L2})}{(R_{R1} - R_{R2}) \cdot C_R + (\tau_{osc,R1} - \tau_{osc,R2})}$$

Die obige Quotientenbildung ermöglicht, daß durch ein Umformen des Quotienten in dem rechten Quotientenausdruck der obigen Gleichung erreicht wird, daß die unerwünschten Einflüsse auf die Periodendauern, die durch die Terme $\tau_{OSC,L1}$ $\tau_{OSC,L2}$ und $\tau_{OSC,R1}$ $\tau_{OSC,R2}$ beschrieben werden, nur noch als Differenzterme $\tau_{OSC,L1}$-$\tau_{OSC,L2}$ bzw. $\tau_{OSC,R1}$-$\tau_{OSC,R2}$ auftreten. Dies bedeutet, daß die Einflüsse der unerwünschten Periodendauern $\tau_{OSC,L1}$ $\tau_{OSC,L2}$ und $\tau_{OSC,R1}$ $\tau_{OSC,R2}$, die nicht durch die Teilkapazitäten und die frequenzbestimmenden Elemente bestimmt werden, hinsichtlich der Quotientenbildung stark vermindert oder beseitigt werden können, wenn erfüllt ist, daß diese Einflüsse für beide Schwingungszustände jeweils eines Oszillators annähernd gleich sind.

Mit anderen Worten ist zu fordern:

$$\tau_{osc,\nu 1} \approx \tau_{osc,\nu 2}$$

wobei $\nu$ = L für den ersten Oszillator 110 und $\nu$ = R für den zweiten Oszillator 112 zu setzen ist.

Diese Optimierungsbedingung wird um so besser erfüllt, je schneller das Schalten der Zustände erfolgt, d.h. je kurzzeitiger die Erfassungszeitintervalle sind, da sich während zweier schnell aufeinanderfolgenden Zustände die Betriebsbedingungen der Oszillatoren nicht wesentlich ändern.

Andererseits ist es wünschenswert, die Größenordnung der Taktfrequenz der Oszillatoren und die Länge der Erfassungszeitintervalle bzw. Sample-Phasen so zu bestimmen, daß die statistischen Rauschanteile über diesen Zeitraum herausgemittelt werden. Die Rauschbeseitigung wird dabei desto besser, je größer die Länge der Erfassungszeitintervalle ist.

Bei einer Optimierung dieser gegensätzlichen Verhalten ist zu beachten, daß nicht-statistische Rauschanteile, wie z. B. ein 1/f-Rauschen von Transistoren der Oszillatoren 110 und 112 einen Einfluß auf die Terme $\tau_{OSC,L1}$, $\tau_{OSC,L2}$, $\tau_{OSC,R1}$ und $\tau_{OSC,R2}$ ausüben, so daß $T_S$ so niedrig zu wählen ist, daß diese nicht-statistischen Rauschanteile minimiert werden, um die entsprechende annähernde Gleichheit

$$\tau_{osc,\nu 1} \approx \tau_{osc,\nu 2}$$

zu erreichen. Unter der obigen Annahme werden die Differenzterme $\tau_{OSC,L1}$ - $\tau_{OSC,L2}$ bzw. $\tau_{OSC,R1}$-$\tau_{OSC,R2}$ annähernd null und es ergibt sich für den obigen Quotienten :

$$\frac{R_{L1} - R_{L2}}{R_{R1} - R_{R2}} \cdot \frac{C_L}{C_R} = k \cdot \frac{C_L}{C_R}$$

Das Ergebnis zeigt, daß mittels der oben beschriebenen Optimierung die durch die Auswerteeinrichtung 148 durchgeführte Quotientenbildung ein Ergebnis liefert, dessen Wert proportional zu dem Quotienten aus $C_1$ und $C_2$ ist. Der dabei auftretende Proportionalitätsfaktor k bildet sich aus dem Quotienten, dessen Zähler eine Differenz des ersten und zweiten Widerstands umfaßt, während der Nenner desselben eine Differenz des dritten und vierten Widerstandes umfaßt. Wie es bereits oben erwähnt wurde, sind bei dem obigen Quotient störende Effekte durch Bauelemente des ersten 110 bzw. zweiten 112 Oszillators bereinigt. Folglich kann mit der obigen Optimierung durch die Quotientenbildung erreicht werden, daß das Verhältnis der Teilkapazitäten $C_L$ und $C_R$ mit einer hohen Genauigkeit erfaßt wird.

Für eine weitere Verarbeitung, die beispielsweise ein Steuern eines Objekts sein kann, legt die Auswerteeinrichtung 148 ein Ausgangssignal, das auf den berechneten Quotienten hinweist, an einen Ausgang an, um das Signal beispielsweise an eine Steuereinrichtung zum Steuern eines Objekts, dessen Bewegung von der Differentialkapazität 118 mittels Änderungen der Teilkapazitäten erfaßt wird, zu liefern. Vorzugsweise ist die gesamte Logik, mit der der Schwerpunkt des Auswertungsalgorithmus realisiert wird, eine digitale Logik, so daß das Ausgangssignal vorzugsweise auch als ein digitales Signal geliefert wird, was eine weitere Verarbeitung in einer digitalen Steuereinrichtung ohne größeren Aufwand ermöglicht.

Typische Werte für die Widerstände R1-R4 sind in einem Bereich größer als 10 kΩ. Bei einem Ausführungsbeispiel umfaßt der erste Widerstand $R_1$ einen Wert von 80 kΩ, der zweite Widerstand einen Wert von 40 kΩ, der dritte Widerstand einen Wert von 45 kΩ und der vierte Widerstand $R_4$ einen Widerstand von 90 kΩ, wenn der Wert der ersten und zweiten Teilkapazität in einem Bereich unter 1 pF liegt. Hinsichtlich der Wahl der Widerstände ist zu bemerken, daß dieselben vorzugsweise die gleiche Größenordnung umfassen, um ein langzeitliches Einschwingen der Oszillatoren bei einem Umschalten zu verhindern. Mit den obigen Widerstandswerten ergibt sich ein Wert für den Proportionalitätsfaktor k, der nahe bei 1, d.h. in einem Bereich von 0,85 bis 1,15 liegt. Dieser Wert von Eins wird bevorzugt, da sich hier mögliche unerwünschte Einflüsse der Widerstände, z. B. Temperatureinflüsse, kompensieren.

Die Taktfrequenzen werden bei diesem Ausführungsbeispiel typischerweise so gewählt, daß sie für einen nichtausgelenkten Zustand der beweglichen Elektrode 124 größer als ein MHz ist. Bei diesen Taktfrequenzen wird die Länge der Erfassungszeitintervalle hinsichtlich der oben beschriebenen Optimierung vorzugsweise in einem Bereich von 100 bis 10.000 Taktperioden und besonders bevorzugt in einem Bereich von 500 bis 1.500 Taktperioden gewählt, wodurch die Erfassungszeitdauer $T_S$ etwa einen Bereich von 0,1 ms bis 10 ms aufweist.

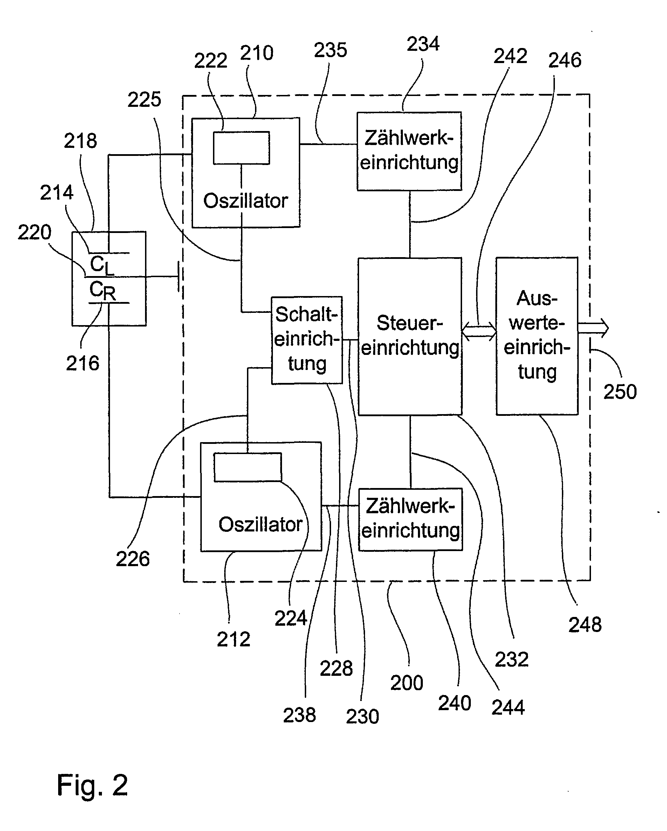

Unter Bezugnahme auf Fig. 2 wird nachfolgend ein weiteres Ausführungsbeispiel als eine Weiterbildung des Ausführungsbeispiels von Fig. 1 erklärt. Gemäß Fig. 2 umfaßt eine Auslesevorrichtung 200 einen ersten Oszillator 210 und einen zweiten Oszillator 212. Die Oszillatoren 210 und 212 sind jeweils mit einer festen Elektrode 214 bzw. 216 einer Differentialkapazität 218 verbunden. Ferner ist eine bewegliche Elektrode 220 der Differentialkapazität 218 über Masse sowohl mit dem ersten Oszillator 210 als auch mit dem zweiten Oszillator 212 verbunden. Entsprechend zu dem Ausführungsbeispiel von Fig. 1 weist der Oszillator 210 ein erstes frequenzbestimmendes Element 222 und der zweite Oszillator 212 ein zweites frequenzbestimmenden Element 224 auf. Der erste Oszillator 210 und der zweite Oszillator 212 sind jeweils über Leitungen 224 bzw. 225 mit einer Schalteinrichtung 228 verbunden. Die Schalteinrichtung 228 ist ferner über eine Leitung 230 mit einer Steuereinrichtung 232 verbunden. Der erste Oszillator 210 ist mit einer ersten Zählwerkeinrichtung 234 zum Erfassen von Periodendauern des ersten Oszillators 210 über eine Leitung 236 verbunden. Ebenso ist der zweite Oszillator 212 mit einer zweiten Zählwerkeinrichtung 240 zum Erfassen von Periodendauern des zweiten Oszillators 212 über eine Leitung 238 verbunden.

Die erste Zählwerkeinrichtung 234 und die zweite Zählwerkeinrichtung 240 sind ferner über Leitungen 242 bzw. 244 mit der Steuereinrichtung 232 verbunden. Die Steuereinrichtung 232 ist über eine Signalleitung 246 mit einer Auswerteeinrichtung 248 verbunden. Die Auswerteeinrichtung 248 weist einen Ausgang 250 auf, der über Signalleitungen 252 mit weiteren Verarbeitungs- und Steuereinrichtungen verbindbar ist. Zum Auslesen der zwischen der Elektrode 214 und 220 gebildeten ersten Teilkapazität $C_L$ und der zwischen den Elektroden 216 gebildeten zweiten Teilkapazität $C_R$ wird entsprechend zu dem Ausführungsbeispiel von Fig. 1 das erste frequenzbestimmende Element 222 in einem ersten Erfassungszeitintervall in einen ersten Zustand und in einem zweiten Erfassungszeitintervall in einen zweiten Zustand geschaltet. Entsprechend wird das zweite frequenzbestimmende Element 224 in dem ersten Erfassungszeitintervall in einen dritten Zustand und in dem zweiten Erfassungszeitintervall in einen vierten Zustand geschaltet. Das erste Erfassungszeitintervall erstreckt sich von einem ersten Zeitpunkt zu einem zweiten Zeitpunkt, während sich das zweite Erfassungszeitintervall von dem zweiten Zeitpunkt zu einem dritten Zeitpunkt erstreckt.

Die Steuereinrichtung 232 steuert die Zählwerkeinrichtung 234 über ein an dieselbe angelegtes Steuersignal derart, daß ein Zählwert zum Erfassen von Taktperioden von Schwingungen des ersten Oszillators 210 auf einen vorbestimmten Anfangswert zurückgesetzt wird, um ein Erfassen einer Anzahl von Taktperioden, die in dem Zeitintervall auftreten, innerhalb dem das erste frequenzbestimmende Element den ersten Zustand aufweist. Ebenso wird die zweite Zählwerkeinrichtung 240 zu dem ersten Zeitpunkt auf einen vorbestimmten Wert zurückgesetzt, um ein kontinuierliches Erfassen einer Anzahl von Taktperioden einer Schwingung des zweiten Oszillators 212 während des Zeitintervalls durchzuführen, innerhalb dem das zweite frequenzbestimmende Element 224 den dritten Zustand aufweist. Das kontinuierliche Erfassen durch die Zählwerkeinrichtungen 234 bzw. 240 bedeutet, daß der Zählwert derselben mit jedem auftretenden Takt um einen bestimmten Wert, d.h. beispielsweise um eine Einheit, weitergestellt wird. Die erste Zählwerkeinrichtung 234 und die zweite Zählwerkeinrichtung 240 werden zu dem zweiten Zeitpunkt wieder auf den Anfangswert zurückgesetzt, so daß die erste Zählwerkeinrichtung 234 während eines zweiten Erfassungszeitintervalls, innerhalb dem sich das erste frequenzbestimmende Element 222 in dem ersten Zustand und das zweite frequenzbestimmende Element 224 in dem dritten Zustand befindet, die Taktpulse des ersten Oszillators 210 erfaßt, während die zweite Zählwerkeinrichtung 240 während des zweiten Erfassungszeitintervalls die Taktperioden des zweiten Oszillator 212 erfaßt. Zu dem dritten Zeitpunkt wird daraufhin ein Umschalten des ersten frequenzbestimmenden Elements 222 in den zweiten Zustand und ein Umschalten des zweiten frequenzbestimmenden Elements 224 in den vierten Zustand durchgeführt. Vorzugsweise weisen das erste Zeitintervall und das zweite Zeitintervall die gleiche Länge auf, was sowohl die Steuerung der frequenzbestimmenden Elemente 222 und 224 und der Erfassungseinrichtungen 234 und 240 als auch eine Berechnung in der Auswerteeinrichtung 248 erleichtert. Wie es bereits unter Bezugnahme auf das Ausführungsbeispiel von Fig. 1 erklärt wurde, wird zum Erreichen eines Auslesens mit hoher Genauigkeit die Länge des ersten und zweiten Erfassungszeitintervalls vorzugsweise so gewählt, daß statistische und nicht-statistische Rauschanteile minimiert werden. Im Unterschied zu dem Ausführungsbeispiel von Fig. 1 wird bei diesem Ausführungsbeispiel ein Erfassen einer zeitlichen Änderung einer momentanen Periodendauer durchgeführt, um ansprechend auf einen Vergleich einer zeitlichen Änderung einer momentanen Periodendauer der ersten, zweiten, dritten oder vierten Schwingung mit einem vorbestimmten Wert ein Signal auszugeben, das auf eine Überschreitung eines vorbestimmten Werts hinweist. Die Erfassung der zeitlichen Änderung kann dabei entweder durch ein Erfassen lediglich einer momentanen Periodendauer einer Schwingung, d.h. entweder der ersten, zweiten, dritten oder vierten Schwingung und ein Vergleichen des erfaßten Werts mit einem Vergleichswert oder durch ein Erfassen der Periodendauern von momentanen Schwingungen des ersten 110 und zweiten 112 Oszillators erfolgen, wie es nachfolgend erklärt wird.

Dazu wird bei diesem Ausführungsbeispiel die durch die erste Zählwerkeinrichtung 234 erfaßte Anzahl von Taktperioden des ersten Oszillators mit der in der zweiten Zählwerkeinrichtung 240 erfaßten Anzahl von Taktperioden des zweiten Oszillators zu vorbestimmten Vergleichs zeitpunkten verglichen. Dies wird ermöglicht, da die Erfassung durch die Zählwerkeinrichtungen 234 und 240 kontinuierlich ist. Das Vergleichen der Zählerwerte der ersten Zählwerkeinrichtung 234 und der zweiten Zählwerkeinrichtung 240 wird durch die Steuereinrichtung 232 gesteuert und ermöglicht, daß kurzzeitig auftretende schnelle Änderungen der ersten und zweiten Teilkapazität schnell erkannt werden können, wie es nachfolgend erklärt wird.

Eine kurzzeitige hohe Kapazitätsänderung bewirkt, daß sich die Werte der Teilkapazitäten kurzzeitig stark unterscheiden. Aufgrund der starken Kapazitätsunterschiede liefern die Oszillatoren Schwingungen mit Periodendauern, die sich bezüglich ihrer Differenz stark gegenüber Werten vor dem Auftreten der kurzzeitigen hohen Kapazitätsänderung unterscheiden. Dies kann ausgenützt werden, da sich bei einer kontinuierlichen Erfassung der Taktperioden für den kurzen Zeitraum der großen Kapazitätsunterschiede der Teilkapazitäten auch stark unterschiedliche Differenzen der Zählwerte der ersten Zählwerkeinrichtung und der zweiten Zählwerkeinrichtung ergeben. Der zeitliche Bereich, in dem eine solche Änderung erfaßt werden kann, hängt dabei von einer Wahl der Vergleichszeitpunkte ab.

Der zeitliche Abstand der Vergleichszeitpunkte kann beispielsweise durch ein externes oder internes Taktsignal festgelegt werden, so daß jeweils nach einer bestimmten Anzahl von Taktzyklen des externen oder internen Taktsignals die Anzahl der erfaßten Taktperioden der ersten Zählwerkeinrichtung 234 und der zweiten Zählwerkeinrichtung 240 verglichen werden. Die zeitlichen Abstände der Vergleichszeitpunkte können beliebig gewählt werden, wobei es bevorzugt ist, dieselben so zu wählen, daß die bei der vorgesehenen Anwendung auftretenden typischen Spitzen von Kapazitätsänderung sicher erkannt werden.

Bei einem Ausführungsbeispiel werden die Vergleichszeitpunkte alternativ durch die von der ersten Zählwerkeinrichtung 234 und der zweiten Zählwerkeinrichtung 240 erfaßten Taktperioden des ersten Oszillators 210 bzw. zweiten Oszillators 212 bestimmt. Dabei ergibt sich der Vergleichszeitpunkt dann, wenn entweder die erste Zählwerkeinrichtung 234 oder die zweite Zählwerkeinrichtung 240 eine vorbestimmte Anzahl von Taktperioden erreicht, die seit dem letzten Vergleichszeitpunkt erfaßt wurden. Beispielsweise wird der Vergleichszeitpunkt festgelegt, wenn seit dem vorhergehenden Vergleichszeitpunkt fünf Taktperioden in der ersten Zählwerkeinrichtung 234 oder in der zweiten Zählwerkeinrichtung 240 erfaßt wurden.

Der zu den Vergleichszeitpunkten durchgeführte Vergleich der Zählwerte der ersten Zählwerkeinrichtung 234 und der zweiten Zählwerkeinrichtung 240 liefert eine Differenz der beiden Zählwerte und ermöglicht ein Erkennen von kurzzeitigen schnellen Kapazitätsänderungen der Teilkapazitäten durch ein Vergleichen mit einem vorbestimmten Grenzwert. Der vorbestimmte Grenzwert kann beispielsweise durch ein Testen bestimmt werden, bei dem die für eine jeweilige Anwendung auftretenden Kapazitätsänderungsspitzen erfaßt werden. Durch ein Vergleichen der Differenz des Zählwerts der ersten Zählwerkeinrichtung 234 mit der zweiten Zählwerkeinrichtung 240 kann ein Entscheidungsverfahren durchgeführt werden, bei dem ein Signal, das auf das Auftreten einer kurzzeitigen hohen Kapazitätsänderung hinweist, wenn ein Betrag der Differenz des Zählwerts der ersten Zählwerkeinrichtung 234 und der zweiten Zählwerkeinrichtung 240 größer als der vorbestimmte Grenzwert ist.

Die Ausleseeinrichtung 200 ermöglicht ferner, daß eine Kapazitätsänderung kontinuierlich mit einer hohen Genauigkeit erfaßt werden kann, indem entsprechend zu dem unter Bezugnahme auf das Ausführungsbeispiel von Fig. 1 beschriebene Verfahren über das erste und zweite Erfassungszeitintervall vier Werte bestimmt werden, die auf die Periodendauern des ersten Oszillators 210 und des zweiten Oszillators 212 in den jeweiligen Zuständen des ersten frequenzbestimmenden Elements 222 und des zweiten frequenzbestimmenden Elements hinweisen. Durch die Quotientenbildung, die unter Bezugnahme auf das Ausführungsbeispiel von Fig. 1 beschrieben wurde, wird unter Verwendung der vier Werte durch die Auswerteeinrichtung 248 ein Ausgangssignal an den Ausgang 250 angelegt, das auf den Quotienten der ersten und zweiten Teilkapazität hinweist. Gleichzeitig ist die Auslesevorrichtung 200 jedoch in der Lage, ein Erkennen von kurzzeitigen hohen Kapazitätsänderungen durchzuführen, indem zu den Vergleichszeitpunkten der Differenzbetrag des Zählwerts der ersten Zählwerkeinrichtung 234 und des Zählwerts der zweiten Zählwerkeinrichtung 240 mit einem vorbestimmten Grenzwert verglichen wird.

Obwohl bei den vorliegenden Ausführungsbeispielen das erste und zweite frequenzbestimmende Element jeweils zwei Widerstände aufweist, können bei anderen Ausführungsbeispielen das erste und zweite frequenzbestimmende Element jeweils zwei Induktivitäten umfassen, wobei die Schalteinrichtung ferner ausgebildet ist, um ein Umschalten der Induktivitäten zum Schalten der Zustände der frequenzbestimmenden Elemente durchzuführen.

Vorzugsweise sind die Ausleseeinrichtungen 100 bzw. 200 als integrierte Schaltungen auf einem Chip vorgesehen, wobei der Chip zusätzlich die Differentialkapazität umfassen kann. Dies ermöglicht einen kompakten Sensor, bei dem sowohl das kapazitive sensitive Element als auch die Auslese/Auswerte-Einrichtung auf einem Chip angeordnet ist. Vorzugsweise umfassen die erste und zweite Erfassungseinrichtung, die Schalteinrichtung und die Auswerteeinrichtung digitale Bauelemente, um eine weitestgehend digitale Verarbeitung auf dem Chip ohne eine äußere Beschaltung zu ermöglichen.

**Patentansprüche**

1. Vorrichtung (100; 200) zum Auslesen einer Differentialkapazität mit einer ersten und zweiten Teilkapazität, einem ersten Oszillator (110; 210) mit einem ersten frequenzbestimmenden Element (130; 222), das mit der ersten Teilkapazität verbindbar ist; und einem zweiten Oszillator (112; 212) mit einem zweiten frequenzbestimmenden Element (136; 224), das mit der zweiten Teilkapazität verbindbar ist; **gekennzeichnet durch** eine Schalteinrichtung (134; 228) die ausgebildet ist, um das erste frequenzbestimmende Element (130; 222) in einen ersten Zustand zu schalten, so daß der erste Oszillator (110; 210) eine erste Schwingung mit einer ersten Periodendauer aufweist, oder in einen zweiten Zustand zu schalten, so daß der erste Oszillator (110; 210) eine zweite Schwingung mit einer zweiten Periodendauer aufweist, und wobei die Schalteinrichtung (134; 228) ferner ausgebildet ist, um das zweite frequenzbestimmende Element (136; 224) in einen dritten Zustand zu schalten, so daß der zweite Oszillator (112, 212) eine dritte Schwingung mit einer dritten Periodendauer aufweist, oder in einen vierten Zustand zu schalten, so daß der zweite Oszillator (112; 212) eine vierte Schwingung mit einer vierten Periodendauer aufweist;

eine erste Erfassungseinrichtung (140; 234), die mit dem ersten Oszillator (110; 210) verbunden ist, um ein erstes Signal, das auf die erste Periodendauer hinweist, und ein zweites Signal, das auf die zweite Periodendauer hinweist, zu erzeugen;

eine zweite Erfassungseinrichtung (144; 240), die mit dem zweiten Oszillator (112; 212) verbunden ist, um ein drittes Signal, das auf die dritte Periodendauer hinweist, und ein viertes Signal, das auf die vierte Periodendauer hinweist, zu erzeugen; und

eine Auswerteeinrichtung (148; 248) zum Bilden unter Verwendung des ersten, zweiten, dritten und vierten Signals eines Quotienten, dessen Zähler von dem ersten Oszillator (110; 210) abhängt und dessen Nenner von dem zweiten Oszillator (112; 212) abhängt, um einen Wert zu erhalten, der auf einen Quotienten der ersten und der zweiten Teilkapazität hinweist.

2. Vorrichtung (100; 200) nach Anspruch 1, bei der der Zähler des Quotienten einen Wert aufweist, der auf eine Differenz der ersten und zweiten Periodendauer hinweist und der Nenner einen Wert aufweist, der auf eine Differenz der dritten und vierten Periodendauer hinweist.

3. Vorrichtung (100; 200) nach Anspruch 1 oder 2, bei der die erste Erfassungseinrichtung (140; 234) ausgebildet ist, um ein erstes Signal, das auf eine erste Anzahl ($N_{L1}$) von Taktperioden der ersten Schwingung in einem ersten Erfassungszeitintervall hinweist, und ein zweites Signal zu erzeugen, das auf eine zweite Anzahl ($N_{L2}$) von Taktperioden der zweiten Schwingung in einem zweiten Erfassungszeitintervall hinweist, und wobei die zweite Erfassungseinrichtung (144; 240) ausgebildet ist, um ein drittes Signal, das auf eine dritte Anzahl ($N_{R1}$) von Taktperioden der dritten Schwingung in dem ersten Erfassungszeitintervall hinweist, und ein viertes Signal zu erzeugen, das auf eine vierte Anzahl ($N_{R2}$) von Taktperioden der vierten Schwingung in dem zweiten Erfassungszeitintervall hinweist, wobei das erste Erfassungszeitintervall zeitlich an das zweite Erfassungszeitintervall angrenzt.

4. Vorrichtung (100; 200) nach Anspruch 3, bei dem der Zähler des Quotienten eine Differenz eines Kehrwerts der ersten Anzahl ($N_{L1}$) von Taktperioden und eines Kehrwerts der zweiten Anzahl ($N_{L2}$) von Taktperioden aufweist, und wobei der Nenner des Quotienten eine Differenz eines Kehrwerts der dritten Anzahl ($N_{R1}$) von Taktperioden und eines Kehrwerts der vierten Anzahl ($N_{R2}$) von Taktperioden aufweist.

5. Vorrichtung (100; 200) nach einem der Ansprüche 3 oder 4, bei dem die erste ($N_{L1}$), zweite ($N_{L2}$), dritte ($N_{R1}$) und vierte ($N_{R2}$) Anzahl von Taktperioden einen Bereich von 1000 bis 100.000 und vorzugsweise einen Bereich von 1500 bis 60.000 umfaßt.

6. Vorrichtung (100; 200) nach einem der Ansprüche 3 bis 5, bei der die vorbestimmte Zeitintervallänge einen Bereich von 1,5 ms bis 100 ms umfaßt.

7. Vorrichtung (100; 200) nach einem der Ansprüche 1 bis 6, bei der die erste, zweite, dritte und vierte Periodendauer einen Bereich von 0,1 bis 1 µs umfassen.

8. Vorrichtung (100; 200) nach einem der Ansprüche 1 bis 7, bei dem das erste frequenzbestimmende Element ausgebildet ist, um einen elektrischen Widerstandswert aufzuweisen, der in dem ersten Zustand durch einen ersten Widerstand (R1) definiert ist und in dem zweiten Zustand durch einen zweiten Widerstand (R2) definiert ist, und wobei ferner das zweite frequenzbestimmende Element ausgebildet ist, um einen elektrischen Widerstandswert aufzuweisen, der in dem dritten Zustand durch einen dritten Widerstand (R1) definiert ist und in dem vierten Zustand durch einen vierten Widerstand (R2) definiert ist.

9. Vorrichtung (100; 200) nach Anspruch 8, bei dem der erste (R1), zweite (R2), dritte (R3) und vierte (R4) Widerstand einen Widerstandswert aufweisen, der größer als 10 kΩ ist.

10. Vorrichtung (100; 200) nach Anspruch 8 oder 9, bei dem der erste (R1), zweite (R2), dritte (R3) und vierte (R4) Widerstand so gewählt sind, daß ein Quotient mit einem Zähler, der eine Differenz des ersten und zweiten Widerstands umfaßt, und einen Nenner, der eine Differenz des dritten (R3) und vierten (R4) Widerstands umfaßt, einen Betrag aufweist, der in einem Bereich von 0,95 bis 1,05 liegt.

**11.** Vorrichtung (100; 200) nach einem der Ansprüche 1 bis 7, bei dem das erste frequenzbestimmende Element (130; 222) eine erste und zweite Induktivität aufweist und das zweite frequenzbestimmende Element (136; 224) eine dritte und vierte Induktivität aufweist.

**12.** Vorrichtung (100; 200) nach einem der Ansprüche 1 bis 11, bei der der erste Oszillator (110; 210) und der zweite Oszillator (112; 212) eine CMOS-Schaltung aufweisen.

**13.** Vorrichtung (100; 200) nach einem der Ansprüche 1 bis 12, wobei dieselbe eine integrierte Schaltung umfaßt, die auf einem Halbleiterchip angeordnet ist.

**14.** Vorrichtung (200) nach einem der Ansprüche 1 bis 13, die ferner eine Vorrichtung (232, 248) zum Erfassen einer zeitlichen Änderung einer momentanen Periodendauer der ersten, zweiten, dritten oder vierten Schwingung aufweist.

**15.** Vorrichtung (200) nach Anspruch 14 bei der die Vorrichtung (232, 248) zum Erfassen einer zeitlichen Änderung einer momentanen Periodendauer eine Einrichtung aufweist, die ausgebildet ist, um ansprechend auf einen Vergleich einer zeitlichen Änderung einer momentanen Periodendauer der ersten, zweiten, dritten oder vierten Schwingung mit einem vorbestimmten Wert ein Signal auszugeben, das auf eine Überschreitung des vorbestimmten Werts hinweist.

**16.** Vorrichtung (200) nach Anspruch 14 oder 15, bei der die Vorrichtung (232, 248) zum Erfassen einer zeitlichen Änderung einer momentanen Periodendauer folgende Merkmale aufweist:

eine Vorrichtung (248) zum Vergleichen eines ersten Erfassungszustands der ersten Erfassungseinrichtung (234) mit einem zweiten Erfassungszustand der zweiten Erfassungseinrichtung (240) zu einem vorbestimmten Zeitpunkt, der innerhalb des ersten oder zweiten Erfassungszeitintervalls liegt, die einen Anfangszeitpunkt und einen Endzeitpunkt aufweisen,

wobei der erste Zustand der ersten Erfassungseinrichtung (234) auf eine erste Vergleichs-Anzahl hinweist, die eine Anzahl von Taktperioden des ersten Oszillators (210) angibt, die von dem Anfangszeitpunkt zu dem vorbestimmten Zeitpunkt auftreten, und
wobei der zweite Erfassungszustand der zweiten Erfassungseinrichtung (240) auf eine zweite Vergleichs-Anzahl von Taktperioden des zweiten Oszillators (212) hinweist, die eine Anzahl von Taktperioden des zweiten Oszillators (212) angibt, die von dem Anfangszeitpunkt zu dem vorbestimmten Zeitpunkt auftreten, und
wobei die Vorrichtung (248) zum Vergleichen eines ersten Erfassungszustands ferner ausgebildet ist, um ansprechend auf den Vergleich des ersten Zustands der ersten Erfassungseinrichtung (234) mit dem zweiten Zustand der zweiten Erfassungseinrichtung (240) einen Vergleich mit einem vorbestimmten Grenzwert durchzuführen, um ansprechend auf den Vergleich ein Ausgangssignal zu erzeugen, das auf ein Überschreiten des vorbestimmten Grenzwerts hinweist.

**17.** Verfahren zum Auslesen einer Differentialkapazität mit einer ersten und zweiten Teilkapazität mit folgenden Schritten:

Versetzen eines ersten Oszillators (110; 210) mit einem ersten frequenzbestimmenden Element (130; 222), das mit der ersten Teilkapazität verbunden ist, in eine erste Schwingung mit einer ersten Periodendauer durch ein Schalten des ersten frequenzbestimmenden Elements (130, 222) in einen ersten Zustand;

Erzeugen eines ersten Signals, das auf die erste Periodendauer hinweist;

Versetzen des ersten Oszillators (110; 210) in eine zweite Schwingung mit einer zweiten Periodendauer durch ein Schalten des ersten frequenzbestimmenden Elements (130; 222) in einen zweiten Zustand;

Erzeugen eines zweiten Signals, das auf die zweite Periodendauer hinweist;

Versetzen eines zweiten Oszillators (112, 212) mit einem zweiten frequenzbestimmenden Element (136; 224), das mit der zweiten Teilkapazität verbunden ist, in eine dritte Schwingung mit einer dritten Periodendauer durch ein Schalten des zweiten frequenzbestimmenden Elements (136; 224) in einen dritten Zustand;

Erzeugen eines dritten Signals, das auf die dritte Periodendauer hinweist;

Versetzen des zweiten Oszillators (112; 212) in eine vierte Schwingung mit einer vierten Periodendauer durch ein Schalten des zweiten frequenzbestimmenden Elements (136; 224) in einen vierten Zustand;

Erzeugen eines vierten Signals, das auf die vierte Periodendauer hinweist;

Bilden unter Verwendung des ersten bis vierten Signals eines Quotienten, dessen Zähler von dem ersten Oszillator (110; 210) abhängt und dessen Nenner von dem zweiten Oszillator (112; 212) abhängt, um einen Wert zu erhalten, der auf einen Quotienten der ersten und der zweiten Teilkapazität hinweist.

18. Verfahren nach Anspruch 17, bei dem in dem Schritt eines Erzeugens eines ersten Signals ferner ein Erfassen einer ersten Anzahl von Taktperioden der ersten Schwingung in einem ersten Erfassungszeitintervall, in dem Schritt eines Erzeugens eines zweiten Signals ferner ein Erfassen einer zweiten Anzahl von Taktperioden der zweiten Schwingung in einem zweiten Erfassungszeitintervall, in dem Schritt eines Erzeugens eines dritten Signals ferner ein Erfassen einer dritten Anzahl von Taktperioden der dritten Schwingung in dem ersten Erfassungszeitintervall und in dem Schritt eines Erzeugens eines vierten Signals ferner ein Erfassen einer vierten Anzahl von Taktperioden der vierten Schwingung in dem zweiten Erfassungszeitintervall durchgeführt wird, wobei das erste Erfassungszeitintervall zeitlich an das zweite Erfassungszeitintervall angrenzt.

19. Verfahren nach Anspruch 18, bei dem in den Schritten eines Erzeugens eines ersten und zweiten Signals ferner ein kontinuierliches Erfassen einer Anzahl von Taktperioden der ersten oder zweiten Schwingung zum Liefern eines ersten momentanen Erfassungszustands, und in den Schritten eines Erzeugens eines dritten und vierten Signals ein kontinuierliches Erfassen einer Anzahl von Taktperioden der dritten oder vierten Schwingung zum Liefern eines zweiten momentanen Erfassungszustands durchgeführt wird.

20. Verfahren nach Anspruch 19, das ferner die folgende Schritte aufweist;
Vergleichen des ersten momentanen Erfassungszustand mit dem zweiten momentanen Erfassungszustand zu einem vorbestimmten Zeitpunkt, der innerhalb des ersten oder zweiten Erfassungszeitintervalls liegt, zum Liefern eines Vergleichswert, der auf eine Differenz des ersten momentanen Erfassungszustand und des zweiten momentanen Erfassungszustand hinweist; und
Vergleichen des Vergleichswert mit einem vorbestimmten Grenzwert zum Liefern eines Vergleichsausgangssignal, das auf ein Überschreiten des Vergleichswert hinsichtlich des vorbestimmten Grenzwerts hinweist.

**Claims**

1. Apparatus (100; 200) for reading out a differential capacity with a first and second partial capacity,
a first oscillator (110; 210) having a first frequency-determining element (130; 222) connectable to the first partial capacity; and
a second oscillator (112; 212) having a second frequency-determining element (136; 224) connectable to the second partial capacity, **characterized by**
a switching means (134; 228) formed to switch the first frequency-determining element (130; 222) into a first state, so that the first oscillator (110; 210) has a first oscillation with a first period duration, or to switch it into a second state, so that the first oscillator (110; 210) has a second oscillation with a second period duration, and wherein the switching means (134; 228) is further formed to switch the second frequency-determining element (136; 224) into a third state, so that the second oscillator (112; 212) has a third oscillation with a third period duration, or to switch it into a fourth state, so that the second oscillator (112; 212) has a fourth oscillation with a fourth period duration;
a first detection means (140; 234) connected to the first oscillator (110; 210) to generate a first signal indicating the first period duration and a second signal indicating the second period duration;
a second detection means (144; 240) connected to the second oscillator (112; 212) to generate a third signal indicating the third period duration and a fourth signal indicating the fourth period duration; and
an evaluation means (148; 248) for forming a quotient, using the first, second, third and fourth signal, whose numerator depends on the first oscillator (110; 210) and whose denominator depends on the second oscillator (112; 212) to obtain a value indicating a quotient of the first and the second partial capacity.

2. Apparatus (100; 200) according to claim 1, wherein the numerator of the quotient has a value indicating a difference of the first and second period duration and the denominator has a value indicating a difference of the third and fourth period duration.

3. Apparatus (100; 200) according to claim 1 or 2, wherein the first detection means (140; 234) is formed to generate a first signal indicating a first number ($N_{L1}$) of clock periods of the first oscillation in a first detection time interval and a second signal indicating a second number ($N_{L2}$) of clock periods of the second oscillation in a second detection time interval, and wherein the second detection means (144; 240) is formed to generate a third signal indicating a third number ($N_{R1}$) of clock periods of the third oscillation in the first detection time interval and a fourth signal indicating a fourth number ($N_{R2}$) of clock periods of the fourth oscillation in the second detection time interval, the first detection time interval temporally bordering on the second detection time interval.

4. Apparatus (100; 200) according to claim 3, wherein the numerator of the quotient has a difference of a reciprocal of the first number ($N_{L1}$) of clock periods and of a reciprocal of the second number ($N_{L2}$) of clock periods, and wherein the denominator of the quotient has a difference of a reciprocal of the third number ($N_{R1}$) of clock periods and of a reciprocal of the fourth number ($N_{R2}$) of clock periods.

5. Apparatus (100; 200) according to any of the claims 3 or 4, wherein the first ($N_{L1}$), second ($N_{L2}$), third ($N_{R1}$) and fourth ($N_{R2}$) numbers of clock periods include a range from 1,000 to 100,000 and advantageously a range from 1,500 to 60,000.

6. Apparatus (100; 200) according to any of the claims 3 to 5, wherein the predetermined time interval length includes a range from 1.5 ms to 100 ms.

7. Apparatus (100; 200) according to any of the claims 1 to 6, wherein the first, second, third and fourth period durations include a range from 0.1 to 1 $\mu$s.

8. Apparatus (100; 200) according to any of the claims 1 to 7, wherein the first frequency-determining element is formed to have an electric resistance defined by a first resistor (R1) in the first state and defined by a second resistor (R2) in the second state, and wherein furthermore the second frequency-determining element is formed to have an electric resistance defined by a third resistor (R3) in the third state and defined by a fourth resistor (R4) in the fourth state.

9. Apparatus (100; 200) according to claim 8, wherein the first (R1), second (R2), third (R3) and fourth (R4) resistors have a resistance greater than 10 k$\Omega$.

10. Apparatus (100; 200) according to claim 8 or 9, wherein the first (R1), second (R2), third (R3) and fourth (R4) resistors are selected such that a quotient with a numerator including a difference of the first and second resistor, and a denominator including a difference of the third (R3) and fourth (R4) resistor comprises an amount which is in a range from 0.95 to 1.05.

11. Apparatus (100; 200) according to any of the claims 1 to 7, wherein the first frequency-determining element (130; 222) has a first and second inductance and the second frequency-determining element (136; 224) has a third and fourth inductance.

12. Apparatus (100; 200) according to any of the claims 1 to 11, wherein the first oscillator (110; 210) and the second oscillator (112; 212) have a CMOS circuit.

13. Apparatus (100; 200) according to any of the claims 1 to 12, wherein the apparatus includes an integrated circuit arranged on a semiconductor chip.

14. Apparatus (200) according to any of the claims 1 to 13, which further comprises an apparatus (232, 248) for detecting a temporal change of a current period duration of the first, second, third or fourth oscillation.

15. Apparatus (200) according to claim 14, wherein the apparatus (232, 248) for detecting a temporal change of a current period duration comprises a means which is formed to output, in response to a comparison of a temporal change of a current period duration of the first, second, third or fourth oscillation with a predetermined value, a signal indicating an exceeding of the predetermined value.

16. Apparatus (200) according to claim 14 or 15, wherein the apparatus (232, 248) for detecting a temporal change of a current period duration comprises:

an apparatus (248) for comparing a first detection state of the first detection means (234) with a second detection state of the second detection means (240) at a predetermined time which is within the first or second detection time interval which comprise an initial time and an end time,

wherein the first state of the first detection means (234) indicates a first comparison number which denotes a number of clock periods of the first oscillator (210) occurring from the initial time to the predetermined time, and wherein the second detection state of the second detection means (240) indicates a second comparison number of clock periods of the second oscillator (212) which denotes a number of clock periods of the second oscillator (212) occurring from the initial time to the predetermined time, and

wherein the apparatus (248) for comparing a first detection state is further formed to carry out a comparison with a predetermined limit value in response to the comparison of the first state of the first detection means (234) with the second state of the second detection means (240), to generate, in response to the comparison, an output signal indicating an exceeding of the predetermined limit value.

17. Method for reading out a differential capacity with a first and second partial capacity comprising the following steps:

setting a first oscillator (110; 210) having a first frequency-determining element (130; 222) connected to the first partial capacity into a first oscillation having a first period duration by switching the first frequency-determining element (130; 222) into a first state;

generating a first signal indicating the first period duration;

setting the first oscillator (110; 210) into a second oscillation having a second period duration by switching the first frequency-determining element (130; 222) into a second state;

generating a second signal indicating the second period duration;

setting a second oscillator (112; 212) having a second frequency-determining element (136; 224) connected to the second partial capacity into a third oscillation having a third period duration by switching the second frequency-determining element (136; 224) into a third state;

generating a third signal indicating the third period duration;

setting the second oscillator (112; 212) into a fourth oscillation having a fourth period duration by switching the second frequency-determining element (136; 224) into a fourth state;

generating a fourth signal indicating the fourth period duration;

forming a quotient, using the first to fourth signal, whose numerator depends on the first oscillator (110; 210) and whose denominator depends on the second oscillator (112; 212) to obtain a value indicating a quotient of the first and the second partial capacity.

18. Method according to claim 17, wherein in the step of generating a first signal a detection of a first number of clock periods of the first oscillation in a first detection time interval, in the step of generating a second signal a detection of a second number of clock periods of the second oscillation in a second detection time interval, in the step of generating a third signal a detection of a third number of clock periods of the third oscillation in the first detection time interval and in the step of generating a fourth signal a detection of a fourth number of clock periods of the fourth oscillation in the second detection time interval is further carried out, the first detection time interval temporally bordering on the second detection time interval.

19. Method according to claim 18, wherein in the steps of generating a first and second signal a continuous detection of a number of clock periods of the first or second oscillation is further carried out to provide a first current detection state, and wherein in the steps of generating a third and fourth signal a continuous detection of a number of clock periods of the third or fourth oscillation is carried out to provide a second current detection state.

20. Method according to claim 19, further comprising the following steps:

comparing the first current detection state with the second current detection state at a predetermined time which is within the first or second detection time interval to provide a comparison value indicating a difference of the first current detection state and of the second current detection state; and

comparing the comparison value with a predetermined limit value to provide a comparison output signal indicating an exceeding of the comparison value with regard to the predetermined limit value.

## Revendications

1. Dispositif (100 ; 200) de lecture d'une capacité différentielle avec une première et une deuxième capacité partielle,

   un premier oscillateur (110; 210) avec un premier élément déterminant la fréquence (130 ; 222) pouvant être relié à la première capacité partielle ; et
   un deuxième oscillateur (112 ; 212) avec un deuxième élément déterminant la fréquence (136 ; 224) pouvant être relié à la deuxième capacité partielle,

   **caractérisé par**
   un dispositif de commutation (134 ; 228) réalisé de manière à commuter le premier élément déterminant la fréquence (130 ; 222) en un premier état, de sorte que le premier oscillateur (110 ; 210) présente une première oscillation avec une première durée de période ou en un deuxième état, de sorte que le premier oscillateur (110 ; 210) présente une deuxième oscillation avec une deuxième durée de période, et le dispositif de commutation (134 ; 228) étant, par ailleurs, réalisé de manière à commuter le deuxième élément déterminant la fréquence (136 ; 224) en un troisième état, de sorte que le deuxième oscillateur (112, 212) présente une troisième oscillation avec une troisième durée de période, ou en un quatrième état, de sorte que le deuxième oscillateur (112 ; 212) présente une quatrième oscillation avec une quatrième durée de période ;
   un premier dispositif de détection (140 ; 234) qui est relié au premier oscillateur (110 ; 210), pour générer un premier signal qui indique la première durée de période, et un deuxième signal qui indique la deuxième durée de période ;
   un deuxième dispositif de détection (144 ; 240) qui est relié au deuxième oscillateur (112 ; 212), pour générer un troisième signal qui indique la troisième durée de période, et un quatrième signal qui indique la quatrième durée de période ; et
   un dispositif d'évaluation (148 ; 248) destiné à former, à l'aide du premier, du deuxième, du troisième et du quatrième signal, un quotient dont le numérateur est fonction du premier oscillateur (110 ; 210) et dont le dénominateur est fonction du deuxième oscillateur (112 ; 212), pour obtenir une valeur qui indique un quotient de la première et de la deuxième capacité partielle.

2. Dispositif (100 ; 200) selon la revendication 1, dans lequel le numérateur du quotient présente une valeur qui indique une différence entre la première et la deuxième durée de période et le dénominateur présente une valeur qui indique une différence entre la troisième et la quatrième durée de période.

3. Dispositif (100 ; 200) selon la revendication 1 ou 2, dans lequel le premier dispositif de détection (140 ; 234) est réalisé de manière à générer un premier signal qui indique un premier nombre ($N_{L1}$) de périodes de cycle d'horloge de la première oscillation dans un premier intervalle de temps de détection et un deuxième signal qui indique un deuxième nombre ($N_{L2}$) de périodes de cycle d'horloge de la deuxième oscillation dans un deuxième intervalle de temps de détection, et le deuxième dispositif de détection (144 ; 240) est réalisé de manière à générer un troisième signal indiquant un troisième nombre ($N_{R1}$) de périodes de cycle d'horloge de la troisième oscillation dans le premier intervalle de temps de détection, et un quatrième signal indiquant un quatrième nombre ($N_{R2}$) de périodes de cycle d'horloge de la quatrième oscillation dans le deuxième intervalle de temps de détection, le premier intervalle de temps de détection étant adjacent dans le temps au deuxième intervalle de temps de détection.

4. Dispositif (100 ; 200) selon la revendication 3, dans lequel le numérateur du quotient présente une différence entre une valeur inverse du premier nombre ($N_{L1}$) de périodes de cycle d'horloge et une valeur inverse du deuxième nombre ($N_{L2}$) de périodes de cycle d'horloge, et le dénominateur du quotient présentant une différence entre une valeur inverse du troisième nombre ($N_{R1}$) de périodes de cycle d'horloge et une valeur inverse du quatrième nombre ($N_{R2}$) de périodes de cycle d'horloge.

5. Dispositif (100 ; 200) selon l'une des revendications 3 ou 4, dans lequel le premier ($N_{L1}$), le deuxième ($N_{L2}$), le troisième ($N_{R1}$) et le quatrième ($N_{R2}$) nombre de périodes de cycle d'horloge comportent une plage de 1000 à 100.000 et, de préférence, une plage de 1500 à 60.000.

6. Dispositif (100 ; 200) selon l'une des revendications 3 à 5, dans lequel la longueur d'intervalle de temps prédéterminée comporte une plage de 1,5 msec. à 100 msec.

7. Dispositif (100 ; 200) selon l'une des revendications 1 à 6, dans lequel la première, la deuxième, la troisième et la quatrième durée de période comportent une plage de 0,1 à 1 $\mu$sec.

8. Dispositif (100 ; 200) selon l'une des revendications 1 à 7, dans lequel le premier élément déterminant la fréquence est réalisé de manière à présenter une valeur de résistance électrique qui est définie, dans le premier état, par une première résistance (R1) et, dans le deuxième état, par une deuxième résistance (R2), et, par ailleurs, le deuxième élément déterminant la fréquence étant réalisé de manière à présenter une valeur de résistance électrique qui est définie, dans le troisième état, par une troisième résistance (R1) et est définie, dans le quatrième état, par une quatrième résistance (R2).

9. Dispositif (100 ; 200) selon la revendication 8, dans lequel la première (R1), la deuxième (R2), la troisième (R3) et la quatrième (R4) résistance présentent une valeur de résistance qui est supérieure à 10 k$\Omega$.

10. Dispositif (100 ; 200) selon la revendication 8 ou 9, dans lequel la première (R1), la deuxième (R2), la troisième (R3) et la quatrième (R4) résistance sont choisies de sorte qu'un quotient avec un numérateur qui comporte une différence entre la première et la deuxième résistance et un dénominateur qui comporte une différence entre une troisième (R3) et une quatrième résistance (R4) présente une valeur située dans une plage de 0,95 à 1,05.

11. Dispositif (100; 200) selon l'une des revendications 1 à 7, dans lequel le premier élément déterminant la fréquence (130 ; 222) présente une première et une deuxième inductance et le deuxième élément déterminant la fréquence (136 ; 224) présente une troisième et une quatrième inductance.

12. Dispositif (100 ; 200) selon l'une des revendications 1 à 11, dans lequel le premier oscillateur (110 ; 210) et le deuxième oscillateur (112 ; 212) présentent un circuit CMOS.

13. Dispositif (100 ; 200) selon l'une des revendications 1 à 12, dans lequel il comporte un circuit intégré qui est disposé sur une puce à semi-conducteur.

14. Dispositif (200) selon l'une des revendications 1 à 13, présentant, par ailleurs, un dispositif (232, 248) destiné à détecter une variation dans le temps d'une durée de période momentanée de la première, de la deuxième, de la troisième ou de la quatrième oscillation.

15. Dispositif (200) selon la revendication 14, dans lequel le dispositif (232, 248) destiné à détecter une variation dans le temps d'une durée de période momentanée présente un dispositif qui est réalisé de manière à sortir, en réaction à une comparaison entre une variation dans le temps d'une durée de période momentanée de la première, de la deuxième, de la troisième ou de la quatrième oscillation avec une valeur prédéterminée, un signal qui indique un dépassement de la valeur prédéterminée.

16. Dispositif (200) selon la revendication 14 ou 15, dans lequel le dispositif (232, 248) destiné à détecter une variation dans le temps d'une durée de période momentanée présente les caractéristiques suivantes :

un dispositif (248) destiné à comparer un premier état de détection du premier dispositif de détection (234) à un deuxième état de détection du deuxième dispositif de détection (240) à un moment prédéterminé qui se situe dans le premier ou le deuxième intervalle de temps de détection qui présentent un moment de début et un moment de fin,
le premier état du premier dispositif de détection (234) indiquant un premier nombre de comparaison indiquant un nombre déterminé de périodes de cycle d'horloge du premier oscillateur (210) qui se produisent entre le moment de début et un moment prédéterminé, et
le deuxième état de détection du deuxième dispositif de détection (240) indiquant un deuxième nombre de comparaison de périodes de cycle d'horloge du deuxième oscillateur (212) indiquant un nombre déterminé de périodes de cycle d'horloge du deuxième oscillateur (212) qui se produisent entre le moment de début et un moment prédéterminé, et

le dispositif (248) destiné à comparer un premier état de détection étant réalisé, par ailleurs, pour effectuer, en réponse à la comparaison entre le premier état du premier dispositif de détection (234) et le deuxième état du deuxième dispositif de détection (240), une comparaison avec une valeur limite prédéterminée, pour générer, en réponse à la comparaison, un signal de sortie qui indique un dépassement de la valeur limite prédéterminée.

17. Procédé de lecture d'une capacité différentielle avec une première et une deuxième capacité partielle, aux étapes suivantes consistant à :

amener un premier oscillateur (110; 210) avec un premier élément déterminant la fréquence (130 ; 222) qui est relié à la première capacité partielle à une première oscillation avec une première durée de période en commutant un premier élément déterminant la fréquence (130, 222) en un premier état ;
générer un premier signal qui indique la première durée de période ;
amener le premier oscillateur (110; 210) en une deuxième oscillation avec une deuxième durée de période en commutant le premier élément déterminant la fréquence (130 ; 222) dans un deuxième état ;
générer un deuxième signal qui indique la deuxième durée de période ;
amener un deuxième oscillateur (112, 212) avec un deuxième élément déterminant la fréquence (136 ; 224) qui est relié à la deuxième capacité partielle à une troisième oscillation avec une troisième durée de période en commutant le deuxième élément déterminant la fréquence (136 ; 224) en un troisième état ;
générer un troisième signal qui indique la troisième durée de période ;
amener le deuxième oscillateur (112 ; 212) dans une quatrième oscillation avec une quatrième durée de période en commutant le deuxième élément déterminant la fréquence (136 ; 224) à un quatrième état ;
générer un quatrième signal qui indique la quatrième durée de période ;
former, à l'aide des premier au quatrième signaux, un quotient dont le numérateur est fonction du premier oscillateur (110 ; 210) et dont le dénominateur est fonction du deuxième oscillateur (112 ; 212), pour obtenir une valeur qui indique un quotient de la première et de la deuxième capacité partielle.

18. Procédé selon la revendication 17, dans lequel est réalisé, à l'étape de génération d'un premier signal, par ailleurs, une détection d'un premier nombre de périodes de cycle d'horloge de la première oscillation dans un premier intervalle de temps de détection, à l'étape de génération d'un deuxième signal, par ailleurs, une détection d'un deuxième nombre de périodes de cycle d'horloge de la deuxième oscillation dans un deuxième intervalle de temps de détection, à l'étape de génération d'un troisième signal, par ailleurs, la détection d'un troisième nombre de périodes de cycle d'horloge de la troisième oscillation dans le premier intervalle de temps de détection et, à l'étape de génération du quatrième signal, par ailleurs, la détection d'un quatrième nombre de périodes de cycle d'horloge de la quatrième oscillation dans le deuxième intervalle de temps de détection, le premier intervalle de temps de détection étant adjacent dans le temps au deuxième intervalle de temps de détection.

19. Procédé selon la revendication 18, dans lequel est effectué, aux étapes de génération d'un premier et d'un deuxième signal, par ailleurs une détection en continu d'un nombre de périodes de cycle d'horloge de la première ou de la deuxième oscillation, pour fournir un premier état de détection momentané, et, aux étapes de génération d'un troisième et d'un quatrième signal, une détection en continu d'un nombre de périodes de cycle d'horloge de la troisième ou de la quatrième oscillation, pour fournir un deuxième état de détection momentané.

20. Procédé selon la revendication 19, présentant, par ailleurs, les étapes suivantes consistant à :

comparer le premier état de détection momentané au deuxième état de détection momentané à un moment prédéterminé qui se situe dans le premier ou le deuxième intervalle de temps de détection, pour fournir une valeur de comparaison qui indique une différence entre le premier état de détection momentané et le deuxième état de détection momentané ; et
comparer la valeur de comparaison à une valeur limite prédéterminée, pour fournir un signal de sortie de comparaison qui indique un dépassement de la valeur de comparaison par rapport à la valeur limite prédéterminée.

EP 1 419 365 B1

Fig.1

Fig. 2